(19) Europäisches Patentamt
European Patent Office
Office européen des brevets

(11) **EP 4 184 698 A2**

(12) **EUROPEAN PATENT APPLICATION**
published in accordance with Art. 153(4) EPC

(43) Date of publication:
**24.05.2023 Bulletin 2023/21**

(21) Application number: **22742926.3**

(22) Date of filing: **25.01.2022**

(51) International Patent Classification (IPC):
**H01M 50/446** (2021.01)    **H01M 50/44** (2021.01)
**H01M 50/449** (2021.01)    **H01M 50/489** (2021.01)
**H01M 10/0587** (2010.01)    **H01M 50/531** (2021.01)
**H01M 10/052** (2010.01)

(52) Cooperative Patent Classification (CPC):
**H01M 50/446; Y02E 60/10**

(86) International application number:
**PCT/KR2022/001333**

(87) International publication number:
**WO 2022/158950 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.01.2021 KR 20210010311**

(71) Applicant: **Lg Chem, Ltd.**
**Seoul 07336 (KR)**

(72) Inventors:
• **LEE, Joo-Sung**
**Daejeon 34122 (KR)**
• **RYU, Bi-Oh**
**Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR FOR LITHIUM SECONDARY BATTERY AND LITHIUM SECONDARY BATTERY HAVING SAME**

(57)    Disclosed is a separator for a lithium secondary battery, including: a porous polymer substrate; and an organic/inorganic composite porous layer disposed on at least one surface of the porous polymer substrate and including a nanofiber scaffold, inorganic particles and a binder polymer, wherein the organic/inorganic composite porous layer has a structure including the inorganic particles inserted to the voids of the nanofiber scaffold, the inorganic particles have a BET specific surface area of 20-75 m$^2$/g, and the binder polymer is present in an amount of 2-5 wt% based on 100 wt% of the organic/inorganic composite porous layer. Also disclosed is a lithium secondary battery including the separator.

FIG. 1

15.0kV 9.0mm x100k SE(M)          500nm

EP 4 184 698 A2

**Description**

TECHNICAL FIELD

The present application claims priority to Korean Patent Application No. 10-2021-0010311 filed on January 25, 2021 in the Republic of Korea.

The present disclosure relates to a separator for a lithium secondary battery and a lithium secondary battery including the same. Particularly, the present disclosure relates to a separator for a lithium secondary battery having improved electrolyte wettability and a lithium secondary battery including the same.

BACKGROUND ART

Recently, energy storage technology has been given an increasing attention. As the application of energy storage technology has been extended to energy for cellular phones, camcorders and notebook PCs and even to energy for electric vehicles, there has been an increasing need for providing batteries used as power sources for such electronic devices with high energy density. Lithium secondary batteries are those satisfying such a need best. Therefore, active studies have been conducted about such lithium secondary batteries.

In general, such a lithium secondary battery includes a positive electrode including a positive electrode active material, a negative electrode including a negative electrode active material, a non-aqueous electrolyte containing a lithium salt and an organic solvent, and a separator interposed between the positive electrode and the negative electrode so that both electrodes may be insulated electrically from each other.

A polyolefin separator using a porous substrate made of polyolefin has been used as such a separator. However, the polyolefin separator is problematic in that it shows severe heat shrinking behavior under a high temperature condition. In order to prevent the above-mentioned problem, there has been suggested a separator including a polyolefin separator as a porous substrate and provided with an organic/inorganic composite porous layer containing inorganic particles and a binder polymer on at least one surface of the porous polymer substrate. However, such a separator has a problem of low electrolyte wettability.

Therefore, there have been some attempts to improve the electrolyte wettability of a separator by increasing the specific surface area of the inorganic particles. However, in the case of inorganic particles having a large specific surface area, there is a problem in that a large amount of binder polymer is required to fix the inorganic particles in the polyolefin porous substrate, resulting in increasing resistance.

DISCLOSURE

Technical Problem

The present disclosure is designed to solve the problems of the related art, and therefore the present disclosure is directed to providing a separator for a lithium secondary battery which shows low resistance and excellent electrolyte wettability and can prevent detachment of inorganic particles, and a lithium secondary battery including the same.

Technical Solution

In one aspect of the present disclosure, there is provided a separator for a lithium secondary battery according to any one of the following embodiments.

According to the first embodiment, there is provided a separator for a lithium secondary battery, including:

a porous polymer substrate; and
an organic/inorganic composite porous layer disposed on at least one surface of the porous polymer substrate and including a nanofiber scaffold, inorganic particles and a binder polymer,
wherein the organic/inorganic composite porous layer has a structure including the inorganic particles inserted to the voids of the nanofiber scaffold,
the inorganic particles have a BET specific surface area of 20-75 $m^2$/g, and
the binder polymer is present in an amount of 2-5 wt% based on 100 wt% of the organic/inorganic composite porous layer.

According to the second embodiment, there is provided the separator for a lithium secondary battery as defined in the first embodiment, wherein the inorganic particles have a BET specific surface area of 30-75 $m^2$/g.

According to the third embodiment, there is provided the separator for a lithium secondary battery as defined in the first or the second embodiment, wherein the nanofiber is hydrophilic.

According to the fourth embodiment, there is provided the separator for a lithium secondary battery as defined in the first or the second embodiment, wherein the nanofiber is hydrophobic.

According to the fifth embodiment, there is provided the separator for a lithium secondary battery as defined in any one of the first to the fourth embodiments, wherein the nanofiber includes an organic fiber, an inorganic fiber or a combination thereof.

According to the sixth embodiment, there is provided the separator for a lithium secondary battery as defined in the fifth embodiment, wherein the organic fiber includes cellulose, chitin or a combination thereof.

According to the seventh embodiment, there is provided the separator for a lithium secondary battery as defined in the sixth embodiment, wherein the cellulose is surface-modified with a hydrophobic material.

According to the eighth embodiment, there is provided the separator for a lithium secondary battery as defined in the fifth embodiment, wherein the inorganic fiber includes a carbon fiber, a boron nitride fiber or a combination thereof.

According to the ninth embodiment, there is provided the separator for a lithium secondary battery as defined in any one of the first to the eighth embodiments, wherein the inorganic particles have an average particle diameter (D50) of 20-40 nm.

According to the tenth embodiment, there is provided the separator for a lithium secondary battery as defined in any one of the first to the ninth embodiments, wherein the inorganic particles include fumed alumina, fumed silica, fumed titanium dioxide, or two or more of them.

According to the eleventh embodiment, there is provided the separator for a lithium secondary battery as defined in any one of the first to the tenth embodiments, wherein the binder polymer includes polyvinylidene fluoride-co-hexafluoropropylene, polyvinylidene fluoride-co-chlorotrifluoroethylene, polyvinylidene fluoride-co-tetrafluoroethylene, polyvinylidene fluoride-co-trichloroethylene, acrylic copolymer, styrene-butadiene copolymer, polyacrylic acid, polymethyl methacrylate, polybutyl acrylate, polyacrylonitrile, polyvinyl pyrro1idone, polyvinyl alcohol, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, or two or more of them.

According to the twelfth embodiment, there is provided the separator for a lithium secondary battery as defined in any one of the first to the eleventh embodiments, wherein the organic/inorganic composite porous layer is prepared by using a nanoparticle dispersion device, and the nanoparticle dispersion device uses beads having a diameter of 0.05-0.5 mm.

According to the thirteenth embodiment, there is provided the separator for a lithium secondary battery as defined in any one of the first to the twelfth embodiments, wherein the organic/inorganic composite porous layer further includes a dispersant.

According to the fourteenth embodiment, there is provided the separator for a lithium secondary battery as defined in any one of the first to the thirteenth embodiments, wherein the surface of the organic/inorganic composite porous layer has an arithmetic mean roughness of 100-900 nm.

In another aspect of the present disclosure, there is also provided a lithium secondary battery according to any one of the following embodiments.

According to the fifteenth embodiment, there is provided a lithium secondary battery which includes an electrode assembly including a positive electrode, a negative electrode and a separator interposed between the positive electrode and the negative electrode, wherein the separator is the same as defined in any one of the first to the fourteenth embodiments.

According to the sixteenth embodiment, there is provided the lithium secondary battery according to the fifteenth embodiment, which is a cylindrical lithium secondary battery including the electrode assembly wound in a cylindrical shape.

According to the seventeenth embodiment, there is provided the lithium secondary battery according to the sixteenth embodiment, wherein the cylindrical lithium secondary battery includes no electrode tab.

According to the eighteenth embodiment, there is provided the lithium secondary battery according to the sixteenth or the seventeenth embodiment, wherein the cylindrical lithium secondary battery has a diameter of 22 mm or more.

Advantageous Effects

The separator for a lithium secondary battery according to an embodiment of the present disclosure includes an organic/inorganic composite porous layer having a structure including inorganic particles inserted to the voids of a nanofiber scaffold, and thus can prevent detachment of the inorganic particles even with a small amount of binder polymer.

The separator for a lithium secondary battery according to an embodiment of the present disclosure includes inorganic particles having a BET specific surface area of 20-75 $m^2/g$, and thus shows excellent electrolyte wettability.

The separator for a lithium secondary battery according to an embodiment of the present disclosure includes a binder polymer in an amount of 2-5 wt% based on 100 wt% of the organic/inorganic composite porous layer, and thus shows low resistance.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a scanning electron microscopic (SEM) image illustrating the surface of the organic/inorganic composite porous layer of the separator for a lithium secondary battery obtained according to Example 1.
FIG. 2 is a scanning electron microscopic (SEM) image illustrating the surface of the organic/inorganic composite porous layer of the separator for a lithium secondary battery obtained according to Example 2.
FIG. 3 is a scanning electron microscopic (SEM) image illustrating the surface of the organic/inorganic composite porous layer of the separator for a lithium secondary battery obtained according to Comparative Example 1.
FIG. 4 is a scanning electron microscopic (SEM) image illustrating the surface of the organic/inorganic composite porous layer of the separator for a lithium secondary battery obtained according to Comparative Example 2.
FIG. 5 is a scanning electron microscopic (SEM) image illustrating the surface of the organic/inorganic composite porous layer of the separator for a lithium secondary battery obtained according to Comparative Example 5.
FIG. 6 is a scanning electron microscopic (SEM) image illustrating the surface of the organic/inorganic composite porous layer of the separator for a lithium secondary battery obtained according to Comparative Example 6.
FIG. 7 shows the electrolyte wettability of the separator for a lithium secondary battery according to Example 1.
FIG. 8 shows the electrolyte wettability of the separator for a lithium secondary battery according to Example 2.
FIG. 9 shows the electrolyte wettability of the separator for a lithium secondary battery according to Comparative Example 1.
FIG. 10 shows the roughness curve when calculating an arithmetic mean roughness.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In one aspect of the present disclosure, there is provided a separator for a lithium secondary battery, including:

a porous polymer substrate; and
an organic/inorganic composite porous layer disposed on at least one surface of the porous polymer substrate and including a nanofiber scaffold, inorganic particles and a binder polymer,
wherein the organic/inorganic composite porous layer has a structure including the inorganic particles inserted to the voids of the nanofiber scaffold,
the inorganic particles have a BET specific surface area of 20-75 $m^2$/g, and
the binder polymer is present in an amount of 2-5 wt% based on 100 wt% of the organic/inorganic composite porous layer.

The separator for a lithium secondary according to an embodiment of the present disclosure is provided with a porous polymer substrate.

According to an embodiment of the present disclosure, the porous polymer substrate is not particularly limited, as long as it may be used generally as a material for a separator for a secondary battery. The porous polymer substrate may be a thin film including a polymeric material, and non-limiting examples of such a polymeric material include at least one selected from polymer resins, such as polyolefin resin, polyethylene terephthalate, polybutylene terephthalate, polyacetal, polyamide, polycarbonate, polyimide, polyetherether ketone, polyether sulfone, polyphenylene oxide, polyphenylene sulfide, and polyethylene naphthalene. In addition, the porous polymer substrate may include a non-woven web or a porous polymer film made of such a polymeric material, or a laminate of two or more layers thereof.

Particularly, the porous polymer substrate is any one of the following a) to e):

> a) A porous film formed by melting and extruding a polymer resin;
> b) A multilayer film formed by stacking two or more layers of the porous films of a);
> c) A non-woven web formed by integrating filaments obtained by melting/spinning a polymer resin;
> d) A multilayer film formed by stacking two or more layers of the non-woven webs of c); and
> e) A multilayered porous film including two or more of a) to d).

The porous polymer substrate may be obtained from the above-mentioned materials by forming pores therein through a conventional process known to those skilled in the art for ensuring high air permeability and porosity, such as a wet process using a solvent, a diluent or a pore forming agent or a dry process based on orientation.

According to an embodiment of the present disclosure, the porous polymer substrate may have a thickness of 1-100 $\mu$m, or 1-30 $\mu$m, but the thickness of the porous polymer substrate is not particularly limited to the above-defined range. When the porous polymer substrate satisfies the above-defined range of thickness, it is possible to ensure energy density, while preventing the separator from being damaged easily during the use of a battery.

Meanwhile, although there is no particular limitation in the pore size and porosity of the porous polymer substrate, the pore size may be 0.01-50 $\mu$m or 0.1-20 $\mu$m, and the porosity may be 5-95%. When the pore size and porosity satisfy the above-defined ranges, it is possible to easily prevent the porous polymer substrate from functioning as resistance and to retain the mechanical properties of the porous polymer substrate with ease.

According to the present disclosure, the porosity and pore size of the porous polymer substrate may be determined from scanning electron microscopic (SEM) images, by using a mercury porosimeter or capillary flow porosimeter, or through the BET6-point method based on nitrogen gas adsorption flow using a porosimetry analyzer (e.g. Belsorp-II mini, Bell Japan Inc.).

The separator for a lithium secondary battery according to an embodiment of the present disclosure is provided with an organic/inorganic composite porous layer on at least one surface of the porous polymer substrate. The organic/inorganic composite porous layer includes a nanofiber scaffold, inorganic particles and a binder polymer. The organic/inorganic composite porous layer prevents the porous polymer substrate from undergoing severe heat shrinking behavior, and thus can improve the safety of the separator.

According to the present disclosure, the inorganic particles have a BET specific surface area of 20-75 $m^2$/g. When the BET specific surface area satisfies the above-defined range, the separator may have improved electrolyte wettability. In addition, the separator may have excellent thermal safety. For example, the separator may have a heat shrinkage of 15% or less, 1-12%, or 2-10%, each in the machine direction (MD) and the transverse direction (TD), as measured after allowing the separator to stand at 180°C for 1 hour.

According to the related art, an organic/inorganic composite porous layer including inorganic particles and a binder polymer has a structure in which a binder polymer interconnects and fixes the inorganic particles so that the inorganic particles may retain their binding state with one another. In the structure, there is no ingredient for binding the inorganic particles with one another, other than the binder polymer. Therefore, the inorganic particles should retain their binding state merely by the binder polymer. However, when the inorganic particles have a large BET specific surface area of 20-75 $m^2$/g, a larger amount of binder polymer is required to bind the inorganic particles with one another, resulting in the problem of an increase in resistance of a separator.

The separator for a lithium secondary battery according to an embodiment of the present disclosure includes an organic/inorganic composite porous layer in which inorganic particles are inserted to the voids of the nanofiber scaffold. Particularly, the inorganic particles are inserted randomly to the voids of the nanofiber scaffold. Therefore, the nanofiber scaffold can fix the inorganic particles, and thus the inorganic particles may be bound to one another sufficiently even with a small amount of binder polymer. In other words, the nanofiber scaffold functions to fix the inorganic particles to reduce the amount of a binder polymer required to bind the inorganic particles, and thus the resultant separator may show low resistance.

When the inorganic particles have a BET specific surface area of less than 20 $m^2$/g, the inorganic particles cannot be inserted to the voids of the nanofiber scaffold, and thus it is difficult to realize a desired organic/inorganic composite porous layer structure. In addition, the nanofibers and the inorganic particles form a bilayer structure, and thus it is difficult to ensure the adhesion strength of the organic/inorganic composite porous layer to the porous polymer substrate.

When the inorganic particles have a BET specific surface area of larger than 75 $m^2$/g, the inorganic particles cannot be fixed by the nanofiber scaffold, even though they are inserted to the voids of the nanofiber scaffold. Thus, the amount of binder polymer required to prevent the detachment of the inorganic particles is still high, thereby making it difficult to ensure the resistance characteristics of the separator.

According to an embodiment of the present disclosure, the inorganic particles may have a BET specific surface area of 30 $m^2$/g or more, 50 $m^2$/g or more, 52 $m^2$/g or more, 55 $m^2$/g or more, 60 $m^2$/g or more, 65 $m^2$/g or more, or 70

$m^2/g$ or more, and 75 $m^2/g$ or less, 73 $m^2/g$ or less, 70 $m^2/g$ or less, 65 $m^2/g$ or less, 60 $m^2/g$ or less, 55 $m^2/g$ or less, 52 $m^2/g$ or less, or 50 $m^2/g$ or less. When the BET specific surface area of the inorganic particles satisfies the above-defined range, it is possible to further improve the thermal safety and electrolyte wettability of the separator.

The BET specific surface area of the inorganic particles may be determined by the BET method. Particularly, the BET specific surface area of the inorganic particles may be determined from the nitrogen gas adsorption at the temperature (77K) of liquid nitrogen by using BELSORP-mino II available from BEL Japan Co.

According to an embodiment of the present disclosure, the inorganic particles may have an average particle diameter of 20-40 nm. When the average particle diameter of the inorganic particles satisfies the above-defined range, the inorganic particles easily have a BET specific surface area of 20-75 $m^2/g$. Therefore, it is easy to form an organic/inorganic composite porous layer having a structure including the inorganic particles inserted to the voids of the nanofiber scaffold. In addition, a denser organic/inorganic composite porous layer may be formed, and the separator may have further enhanced thermal safety.

As used herein, the term 'average particle diameter of the inorganic particles' means a D50 particle diameter, and 'D50 particle diameter' means a particle diameter at a point of 50% in the accumulated particle number distribution depending on particle diameter. The particle diameter may be determined by using a laser diffraction method. Particularly, a powder to be analyzed is dispersed in a dispersion medium and introduced to a commercially available laser diffraction particle size analyzer (e.g. Microtrac S3500), and then a difference in diffraction pattern depending on particle size is determined, when particles pass through laser beams, and then particle size distribution is calculated. Then, the particle diameter at a point of 50% of the particle number accumulated distribution depending on particle diameter is calculated to determine D50. The average particle diameter may refer to the average particle diameter of primary particles.

According to an embodiment of the present disclosure, the inorganic particles may be fumed inorganic particles. As used herein, fumed inorganic particles refer to inorganic particles which form secondary particles through the interconnection thereof by the collision of elementary particles formed by hydrolysis in a flame at 1,000°C or higher, wherein the secondary particles form three-dimensional aggregates (agglomerates). When the inorganic particles are fumed inorganic particles, it is easy to form inorganic particles having a BET specific surface area of 20-75 $m^2/g$. It is also easy to form inorganic particles having an average particle diameter of 20-40 nm based on primary particles.

Particular examples of the fumed inorganic particles may include fumed alumina, fumed silica, fumed titanium dioxide, or two or more of them. Particularly, when the inorganic particles are fumed alumina particles, the separator may have a heat shrinkage of 15% or less, each in the machine direction (MD) and the transverse direction (TD), as measured after allowing the separator to stand at 180°C for 1 hour.

As used herein, the term 'nanofiber scaffold' refers to a scaffold structure which includes nanofibers entangled three-dimensionally with one another, is structurally stable and has voids present among the nanofibers. The nanofiber scaffold can fix inorganic particles having a predetermined BET specific surface area, and the separator may have improved electrolyte wettability by virtue of the nanofiber scaffold.

The nanofibers refer to those having a diameter of less than 1 $\mu$m.

According to an embodiment of the present disclosure, the nanofibers may be those having a fibril-like shape with an aspect ratio of 5 or more.

According to an embodiment of the present disclosure, the nanofibers may have a diameter of 500 nm or less, 10-300 nm, or 20-100 nm.

When the nanofibers have the above-defined aspect ratio and/or diameter, they have a higher aspect ratio as compared to the inorganic particles to allow rapid diffusion of an electrolyte along the surface of the nanofiber scaffold, thereby facilitating improvement of the electrolyte wettability.

According to an embodiment of the present disclosure, the nanofibers may be hydrophilic. Herein, 'hydrophilic' refers to a contact angle of less than 45° between the surface of the nanofiber scaffold and a water drop. When the nanofibers are hydrophilic, it is possible to facilitate improvement of the electrolyte wettability of the separator. According to another embodiment of the present disclosure, the nanofibers may be hydrophobic. When the nanofibers are hydrophobic, they have a lower water content as compared to hydrophilic nanofibers capable of retaining water, and thus can prevent problems caused by water with ease. Even when the nanofibers are hydrophobic, the inorganic particles have a large BET specific surface area so that the electrolyte wettability may be improved sufficiently. Herein, 'hydrophobic' refers to a contact angle of 45° or more between the surface of the nanofiber scaffold and a water drop.

According to an embodiment of the present disclosure, the nanofibers may include organic fibers, inorganic fibers or a combination thereof. For example, the organic fibers may include cellulose, chitin or a combination thereof. In addition, the inorganic fibers may include carbon fibers, boron nitride fibers or a combination thereof.

According to an embodiment of the present disclosure, the cellulose may be surface-modified with a hydrophobic material. It is possible to impart hydrophobicity to cellulose by modifying the surface of cellulose chemically with the surface hydroxyl groups of the amorphous portion of cellulose. Such chemical modification for imparting hydrophobicity may use silane preferably. More particularly, cellulose nanofibers are dispersed in a silane solution, and ultrasonic waves are applied thereto to induce surface modification.

According to an embodiment of the present disclosure, the nanofiber scaffold may be present in an amount of 1-20 wt%, 2-18 wt%, or 3-15 wt%, based on 100 wt% of the organic/inorganic composite porous layer. When the content of the nanofiber scaffold satisfies the above-defined range, it is possible to ensure a space sufficient to allow infiltration of the inorganic particles, and thus to prevent detachment of the inorganic particle with ease.

According to an embodiment of the present disclosure, the inorganic particles may be present in an amount of 75-97 wt%, 75-95 wt%, or 75-80 wt%, based on 100 wt% of the organic/inorganic composite porous layer. When the content of the inorganic particles satisfies the above-defined range, it is possible to ensure the heat shrinkage of a separator with ease, even when the organic/inorganic composite porous layer has a small thickness. In addition, when external foreign materials are incorporated to the separator during the assemblage of a battery, it is possible to prevent a short-circuit between a positive electrode and a negative electrode by virtue of the resistance layer.

According to the present disclosure, the binder polymer is present in an amount of 2-5 wt% based on 100 wt% of the organic/inorganic composite porous layer. For example, the binder polymer may be present in an amount of 2 wt% or more, 2.5 wt% or more, 3 wt% or more, 3.5 wt% or more, 4 wt% or more, or 4.5 wt% or more, and 5 wt% or less, 4.5 wt% or less, 4 wt% or less, 3.5 wt% or less, 3 wt% or less, 2.5 wt% or less, or 2 wt% or less.

The binder polymer supplementarily assists firm binding between the nanofiber scaffold and the inorganic particles and/or between the organic/inorganic composite porous layer and the porous polymer substrate. The separator for a lithium secondary battery according to an embodiment of the present disclosure has a structure including the inorganic particles inserted to the voids of the nanofiber scaffold, and the nanofiber scaffold functions to fix the inorganic particles. Therefore, even when using a significantly smaller amount of binder polymer as compared to the related art, it is possible to prevent detachment of the inorganic particles.

When the content of the binder polymer is less than 2 wt% based on 100 wt% of the organic/inorganic composite porous layer, the binding force between the organic/inorganic composite porous layer and the porous polymer substrate is insufficient, and thus the organic/inorganic composite porous layer may be detached from the porous polymer substrate to cause a problem of contamination.

When the content of the binder polymer is larger than 5 wt% based on 100 wt% of the organic/inorganic composite porous layer, the binder polymer functions as resistance to cause an increase in resistance of the separator.

The binder polymer may be one used conventionally for forming an organic/inorganic composite porous layer. The binder polymer may have a glass transition temperature ($T_g$) of -200 to 200°C. When the binder polymer satisfies the above-defined range of glass transition temperature, it can provide the finished organic/inorganic composite porous layer with improved mechanical properties, such as flexibility and elasticity. The binder polymer may have ion conductivity. When the binder polymer has ion conductivity, it is possible to further improve the performance of a battery. The binder polymer may have a dielectric constant ranging from 1.0 to 100 (measured at a frequency of 1 kHz), or from 10 to 100. When the binder polymer has the above-defined range of dielectric constant, it is possible to improve the salt dissociation degree in an electrolyte.

According to an embodiment of the present disclosure, the binder polymer may include polyvinylidene fluoride-co-hexafluoropropylene, polyvinylidene fluoride-co-chlorotrifluoroethylene, polyvinylidene fluoride-co-tetrafluoroethylene, polyvinylidene fluoride-co-trichloroethylene, acrylic copolymer, styrene-butadiene copolymer, polyacrylic acid, polymethyl methacrylate, polybutyl acrylate, polyacrylonitrile, polyvinyl pyrro1idone, polyvinyl alcohol, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, or two or more of them.

The acrylic copolymer may include, but is not limited to: ethyl acrylate-acrylic acid-N,N-dimethyl acrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them.

According to an embodiment of the present disclosure, the organic/inorganic composite porous layer may further include a dispersant. Particular examples of the dispersant may include carboxymethyl cellulose (CMC), carboxymethyl cellulose salt, polyacrylic acid (PAA), polymethyl methacrylate (PMAA), citric acid, or two or more of them.

According to an embodiment of the present disclosure, there is no particular limitation in the thickness of the organic/inorganic composite porous layer, but the thickness may be 0.5-50 $\mu$m, or 1-10 $\mu$m.

According to an embodiment of the present disclosure, the organic/inorganic composite porous layer may have a pore size of 0.001-10 $\mu$m, or 0.001-1 $\mu$m.

The pore size of the organic/inorganic composite porous layer may be determined by using the capillary flow porometry. The capillary flow porometry measures the diameter of the smallest pore in the thickness direction. Therefore, in order to determine the average pore size of the organic/inorganic composite porous layer alone by the capillary flow porometry, it is required to separate the organic/inorganic composite porous layer from the crosslinked structure-containing polyolefin porous substrate, and to surround the separated inorganic composite porous layer with a non-woven web capable of supporting the same. Herein, the non-woven web should have a significantly larger pore size as compare to the pore size of the organic/inorganic composite porous layer. The porosity of the organic/inorganic composite porous layer may be determined from scanning electron microscopic (SEM) images, by using a mercury porosimeter or capillary flow porosimeter, or through the BET6-point method based on nitrogen gas adsorption flow using a porosimetry analyzer (e.g. Belsorp-II mini, Bell Japan Inc.).

In addition, the organic/inorganic composite porous layer may have a porosity of 5-95%, 10-95%, 20-90%, or 30-80%. The porosity corresponds to a value obtained by calculating the apparent density from the unit volume defined by the thickness, width and length of the organic/inorganic composite porous layer and the weight of the organic/inorganic composite porous layer, subtracting the apparent density from the true density of each ingredient, and dividing the resultant value by the true density.

The organic/inorganic composite porous layer may be formed on one surface or both surfaces of the porous polymer substrate. When the organic/inorganic composite porous layer is formed on both surfaces of the porous polymer substrate, it is possible to further improve the electrolyte wettability of the separator.

According to an embodiment of the present disclosure, the surface of the organic/inorganic composite porous layer may have an arithmetic mean roughness (Ra) of 100-900 nm.

When inorganic particles having a BET specific surface area of 20-75 $m^2/g$ is used according to the related art, the surface of the organic/inorganic composite porous layer has a low arithmetic mean roughness (Ra) to cause problems, such as wrinkles or snake-like twisting.

Since the separator for a lithium secondary battery according to an embodiment of the present disclosure has a structure including inorganic particles having a BET specific surface area of 20-75 $m^2/g$ and inserted to the voids of the nanofiber scaffold, the surface of the organic/inorganic composite porous layer may easily have an arithmetic mean roughness (Ra) of 100-900 nm. Therefore, the separator ensures frictional properties to facilitate the assemblage of a battery. Particularly, when the battery is a cylindrical battery, it is possible to easily prevent the problems, such as wrinkles or snake-like twisting, occurring during the winding of an electrode assembly.

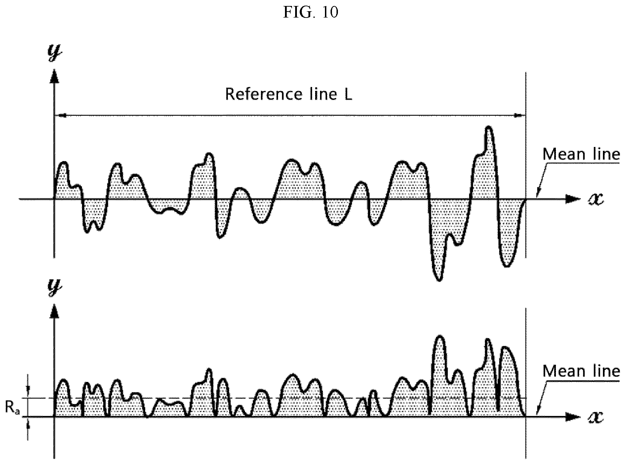

As used herein, the term 'arithmetic mean roughness' refers to a roughness curve expressed by the following Formula 1, when a reference length of L is extracted in the mean line direction of the roughness curve in the roughness distribution of the surface determined sequentially from the start point, as depicted in FIG. 10, the mean line direction is taken as X axis, and the height direction is taken as Y axis.

[Formula 1]

$$R_a = \frac{1}{L} \int_0^L |f(x)| dx$$

For example, the arithmetic mean roughness may be determined by using an optical profiler (NV-2700) available from Nano System.

The organic/inorganic composite porous layer may be obtained by adding/dispersing nanofibers, inorganic particles having a BET specific surface area of 20-75 $m^2/g$ and a binder polymer to/in a solvent for the binder polymer. Herein, the nanofibers, the inorganic particles and the binder polymer may be dispersed by using a nanoparticle dispersion device.

The nanoparticle dispersion device may use beads having a diameter of 0.05-5 mm. When the bead diameter of the nanoparticle dispersion device satisfies the above-defined range, such a small diameter of beads facilitates dispersion of the nanofibers, the inorganic particles and the binder polymer. In other words, it is possible to easily prevent the problem of poor dispersion and entanglement of the nanofibers, the inorganic particles and the binder polymer, caused by a large diameter of beads.

While the nanofibers, the inorganic particles and the binder polymer are coated on at least one surface of the porous polymer substrate and then dried, the nanofibers form a scaffold structure first, and then the inorganic particles may be inserted to the voids of the nanofiber scaffold, as the solvent for the binder polymer evaporates.

The above-described separator for a lithium secondary battery may be interposed between a positive electrode and a negative electrode to obtain a lithium secondary battery.

The lithium secondary battery may include a lithium metal secondary battery, a lithium-ion secondary battery, a lithium polymer secondary battery, a lithium-ion polymer secondary battery, or the like.

The electrodes used in combination with the separator according to the present disclosure are not particularly limited, and may be obtained by allowing an electrode active material layer containing an electrode active material, a conductive material and a binder to be bound to an electrode current collector through a method generally known in the art.

Among the electrode active materials, non-limiting examples of the positive electrode active material include, but are not limited to: layered compounds, such as lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as $LiV_3O_8$, $LiV_3O_4$, $V_2O_5$ or $Cu_2V_2O_7$; Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; disulfide compounds; $Fe_2(MoO_4)_3$; or the like.

Non-limiting examples of the negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used.

Non-limiting examples of the positive electrode current collector include foil made of aluminum, nickel or a combination thereof. Non-limiting examples of the negative electrode current collector include foil made of copper, gold, nickel, copper alloys or a combination thereof.

According to an embodiment of the present disclosure, the conductive material used in each of the negative electrode and the positive electrode may be added in an amount of 1-30 wt% based on the total weight of the active material layer. The conductive material is not particularly limited, as long as it causes no chemical change in the corresponding battery and has conductivity. Particular examples of the conductive material include: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives, or the like.

According to an embodiment of the present disclosure, the binder used in each of the negative electrode and the positive electrode independently is an ingredient which assists binding between the active material and the conductive material and binding to the current collector. In general, the binder may be added in an amount of 1-30 wt% based on the total weight of the active material layer. Particular examples of the binder include polyvinylidene fluoride (PVDF), polyacrylic acid (PAA), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylenepropylene-diene terpolymer (EPDM), sulfonated EPDM, styrene-butadiene rubber, fluoro-rubber, various copolymers, or the like.

According to an embodiment of the present disclosure, the lithium secondary battery includes an electrolyte, which may include an organic solvent and a lithium salt. In addition, the electrolyte may include an organic solid electrolyte or an inorganic solid electrolyte.

Particular examples of the organic solvent include aprotic organic solvents, such as N-methyl-2-pyrrolidone, ethylene carbonate, propylene carbonate, butylene carbonate, dimethyl carbonate, diethyl carbonate, γ-butyrolactone, 1,2-dimethoxyethane, tetrahydrofuran , 2-methyl tetrahydrofuran, dimethyl sulfoxide, 1,3-dioxolan, formamide, dimethyl formamide, dioxolan, acetonitrile, nitromethane, methyl formate, methyl acetate, triphosphate, trimethoxymethane, dioxolan derivatives, sulforane, methyl sulforane, 1,3-dimethyl-2-imidazolidinone, propylene carbonate derivatives, tetrahydrofuran derivatives, ethers, methyl propionate, ethyl propionate, or the like.

The lithium salt is a material which can be dissolved in the non-aqueous electrolyte with ease, and particular examples thereof include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborane , lithium lower aliphatic carboxylate, lithium tetraphenyl borate, lithium imide, or the like.

In addition, the electrolyte may further include pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the charge/discharge characteristics, flame resistance, or the like. Optionally, the electrolyte may further include a halogen-containing solvent, such as carbon tetrachloride or trifluoroethylene, in order to impart non-combustibility. The electrolyte may further include carbon dioxide gas in order to improve the high-temperature storage characteristics.

Particular examples of the organic solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, polymers containing an ionically dissociable group, or the like.

Particular examples of the inorganic solid electrolyte may include nitrides, halides and sulfates of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH and $Li_3PO_4$-$Li_2S$-$SiS_2$.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the separator for a lithium secondary battery may be interposed between the positive electrode and the negative electrode. When an electrode assembly is formed by assembling a plurality of cells or electrodes, the separator may be interposed between the adjacent cells or electrodes. The electrode assembly may have various structures, such as a simple stack type, a jelly-roll type, a stacked-folded type, a laminated-stacked type, or the like.

According to an embodiment of the present disclosure, the separator for a lithium secondary battery may be applied to a battery in the form of an electrode assembly including the separator interposed between a positive electrode and a negative electrode. The process for applying the electrode assembly to the battery may include lamination (stacking) and folding of the separator with electrodes, besides a conventional process, winding.

According to an embodiment of the present disclosure, the lithium secondary battery may be a cylindrical lithium secondary battery in which the electrode assembly is wound in a cylindrical shape.

According to an embodiment of the present disclosure, the cylindrical lithium secondary battery may include no electrode tab. When the cylindrical lithium secondary battery includes no electrode tab, the non-coated portions of the electrode are welded at both ends of the cylindrical jelly-roll and take the place of a tab. Therefore, the path through which an electrolyte is introduced into the jelly-roll at both ends of the jelly-roll is limited, thereby making it difficult to inject the electrolyte. However, the above-mentioned problem may be overcome, when using the separator for a lithium secondary battery according to an embodiment of the present disclosure.

According to an embodiment of the present disclosure, the cylindrical lithium secondary battery may have a diameter of 22 mm or more. When the cylindrical lithium secondary battery has the above-defined range of diameter, the battery has a large size, and thus higher electrolyte wettability is required so that the battery may be operated well. Since the separator for a lithium secondary battery according to an embodiment of the present disclosure has excellent electrolyte wettability, the battery may be operated well.

## MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

## Example 1

First, 20 wt% of cellulose nanofibers (Hansol Paper, Ltd.), 77 wt% of fumed alumina (Evonik Co., BET specific surface area: 65 m$^2$/g, average particle diameter of primary particles (D50) 24 nm), and 3 wt% of polyvinyl alcohol-polyacrylic acid copolymer (LG Chem.) as a binder polymer were dispersed in water by using a nanomill (Nanointec, NPM) filled with zirconia beads having a diameter of 0.1 mm to prepare a slurry for forming an organic/inorganic composite porous layer (solid content of slurry: 40 wt%).

The slurry was coated on both surfaces of a polyethylene porous substrate (Senior Co., SW311H, thickness: 11 $\mu$m) through a direct metering process (Kobayashi Co., Direct Metering coating), and dried at 80°C for 3 minutes to obtain a separator having an organic/inorganic composite porous layer formed thereon.

## Example 2

A separator was obtained in the same manner as Example 1, except that chitin nanofibers (Sigma-Aldrich Co.) were used instead of the cellulose nanofibers.

## Comparative Example 1

First, 97 wt% of alumina (DAEHAN Ceramics Co. Ltd., ALK-N1, BET specific surface area: 8.9 m$^2$/g, average particle diameter of primary particles (D50) 280 nm) and 3 wt% of polyvinyl alcohol-polyacrylic acid copolymer (LG Chem.) as a binder polymer were dispersed in water to prepare a slurry for forming an organic/inorganic composite porous layer (solid content of slurry: 40 wt%).

The slurry was coated on both surfaces of a polyethylene porous substrate (Senior Co., SW311H, thickness: 11 $\mu$m) through a direct metering process (Kobayashi Co., Direct Metering coating), and dried at 80°C for 3 minutes to obtain a separator having an organic/inorganic composite porous layer formed thereon.

## Comparative Example 2

A separator was obtained in the same manner as Comparative Example 1, except that the same alumina as Example 1 was used.

**Comparative Example 3**

First, 97 wt% of fumed alumina (Evonik Co., BET specific surface area: 65 m$^2$/g, average particle diameter of primary particles (D50) 24 nm) and 3 wt% of polyvinyl alcohol-polyacrylic acid copolymer (LG Chem.) as a binder polymer were dispersed in water to prepare a first slurry for forming an organic/inorganic composite porous layer (solid content of slurry: 40 wt%).

Next, 80 wt% of cellulose nanofibers (Hansol Paper Co., Ltd.) and 20 wt% of polyvinyl alcohol-polyacrylic acid copolymer (LG Chem.) as a binder polymer were dispersed in water to prepare a second slurry for forming an organic/inorganic composite porous layer.

The first slurry was coated on both surfaces of a polyethylene porous substrate (Senior Co., SW311H, thickness: 11 $\mu$m) through a direct metering process (Kobayashi Co., Direct Metering coating), and dried at 80°C for 3 minutes, and then the second slurry was coated and dried in the same manner as mentioned above to obtain a separator having an organic/inorganic composite porous layer formed thereon.

The resultant separator includes a layer containing the inorganic particles and the binder polymer and formed on the porous polymer substrate, and further includes a layer containing the nanofibers and the binder polymer and formed on the above layer, and thus has two different layers formed separately from each other.

The layer containing the inorganic particles and the binder polymer causes cracking among the inorganic particles due to the lack of a nanofiber scaffold, and thus has a risk of micro-short.

In addition, the layer containing the nanofibers and the binder polymer causes an increase in the resistance of the separator due to such a high binder content.

**Comparative Example 4**

A separator was obtained in the same manner as Example 1, except that the same alumina as Comparative Example 1 was used.

The resultant separator includes inorganic particles having a BET specific surface area of less than 20 m$^2$/g, and thus the inorganic particles cannot be inserted to the voids of the nanofiber scaffold. As a result, the separator has a layer in which the inorganic particles are separated from the nanofiber scaffold.

**Comparative Example 5**

A separator was obtained in the same manner as Example 1, except that a bead mill filed with zirconia beads having a diameter of 0.8 mm was used.

**Comparative Example 6**

First, 92 wt% of fumed alumina (Evonik Co., BET specific surface area: 65 m$^2$/g, average particle diameter of primary particles (D50) 24 nm) and 8 wt% of polyvinyl alcohol-polyacrylic acid copolymer (LG Chem.) as a binder polymer were dispersed in water to prepare a slurry for forming an organic/inorganic composite porous layer (solid content of slurry: 40 wt%).

The slurry was coated on both surfaces of a polyethylene porous substrate (Senior Co., SW311H, thickness: 11 $\mu$m) through a direct metering process (Kobayashi Co., Direct Metering coating), and dried at 80°C for 3 minutes to obtain a separator having an organic/inorganic composite porous layer formed thereon.

**Test Example 1: Analysis of Structure of Organic/Inorganic Composite Porous Layer of Separator**

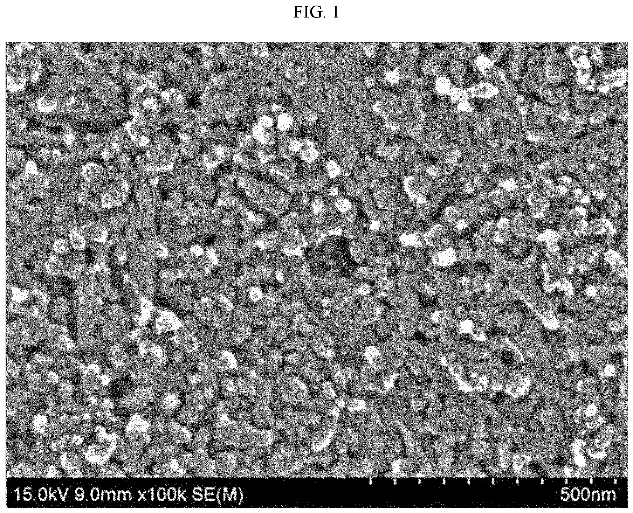

The structure of the organic/inorganic composite porous layer of the separator for a lithium secondary battery according to each of Examples 1 and 2 and Comparative Examples 1, 2, 5 and 6 was analyzed through the scanning electron microscopic (SEM) image. The results are shown in FIGS. 1-6, respectively.

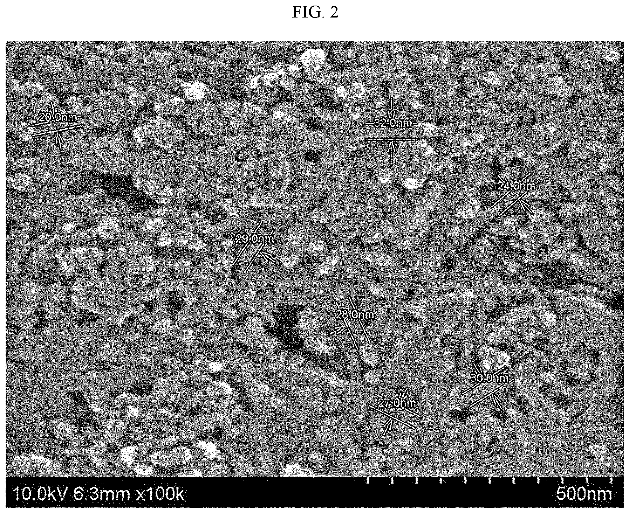

As shown in FIGS. 1 and 2, it can be seen that the organic/inorganic composite porous layer of the separator for a lithium secondary battery according to each of Examples 1 and 2 has a structure including inorganic particles inserted to the voids of a nanofiber scaffold.

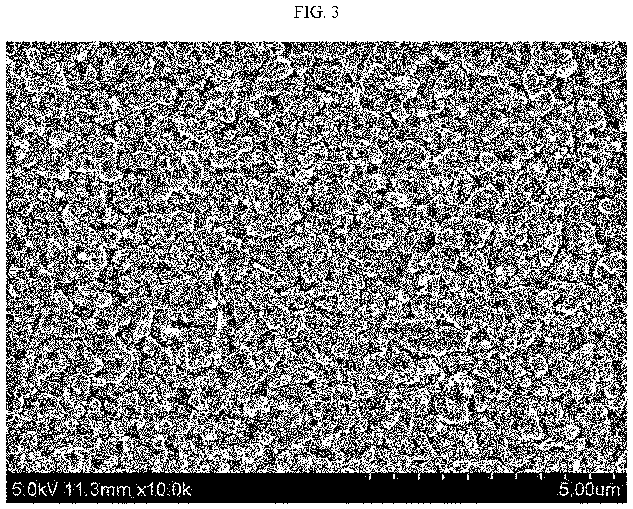

As shown in FIG. 3, it can be seen that the organic/inorganic composite porous layer of the separator for a lithium secondary battery according to Comparative Example 1 uses inorganic particles having a BET specific surface area of less than 20 m$^2$/g, and thus the inorganic particles are bound to one another even with a small amount of binder polymer.

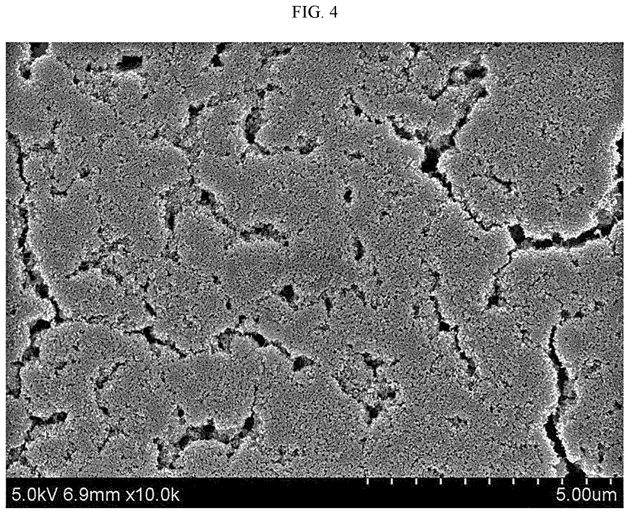

As shown in FIG. 4, it can be seen that the organic/inorganic composite porous layer of the separator for a lithium secondary battery according to Comparative Example 2 causes cracking among the inorganic particles due to the lack of a nanofiber scaffold, and thus has a risk of micro-short.

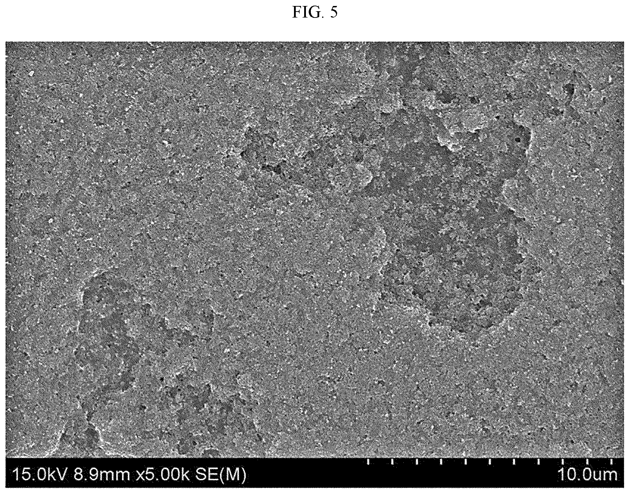

As shown in FIG. 5, it can be seen that the organic/inorganic composite porous layer of the separator for a lithium secondary battery according to Comparative Example 5 cannot ensure dispersibility, and thus has irregular crater-like defects.

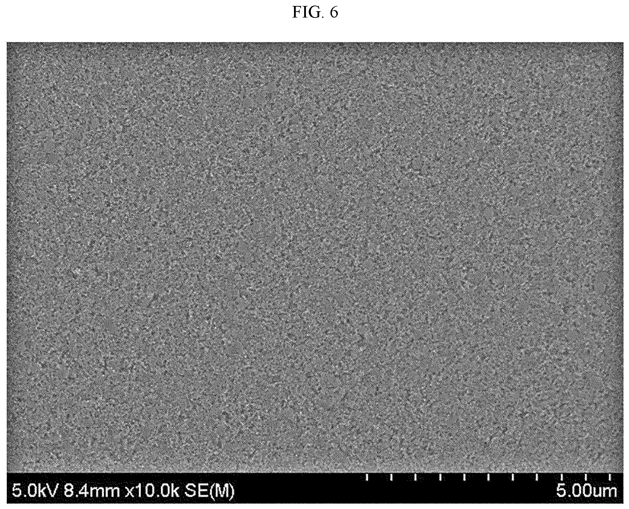

As shown in FIG. 6, it can be seen that the organic/inorganic composite porous layer of the separator for a lithium secondary battery according to Comparative Example 6 has a binder content of larger than 5 wt%, and thus causes no cracking among the inorganic particles, unlike the organic/inorganic composite porous layer of the separator for a lithium secondary battery according to Comparative Example 2.

**Test Example 2: Determination of Electrolyte Wettability and Heat Shrinkage at 180°C of Separator**

The separator for a lithium secondary battery according to each of Examples 1 and 2 and Comparative Examples 1-6 was cut into a square shape having a size of MD 10 cm x TD 10 cm and allowed to stand in a constant-temperature oven maintained at 180°C, and then a change in length was measured by a ruler to determine the heat shrinkage in the machine direction (MD) and the transverse direction (TD) at 180°C. The results are shown in the following Table 1.

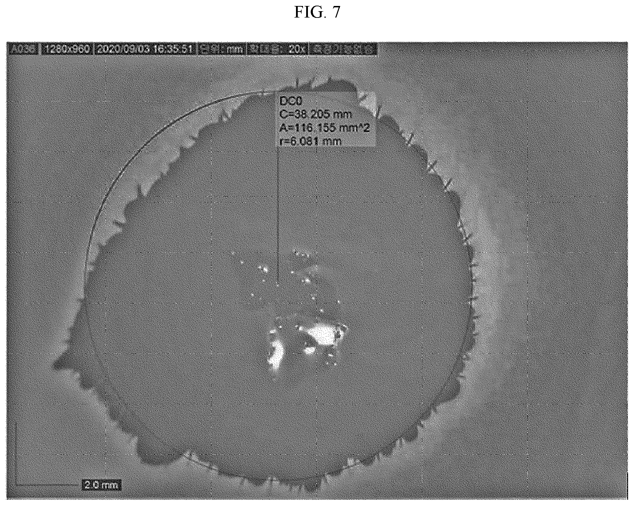

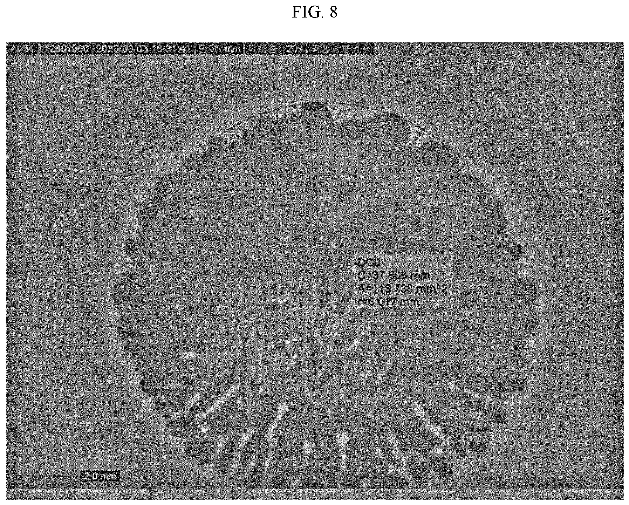

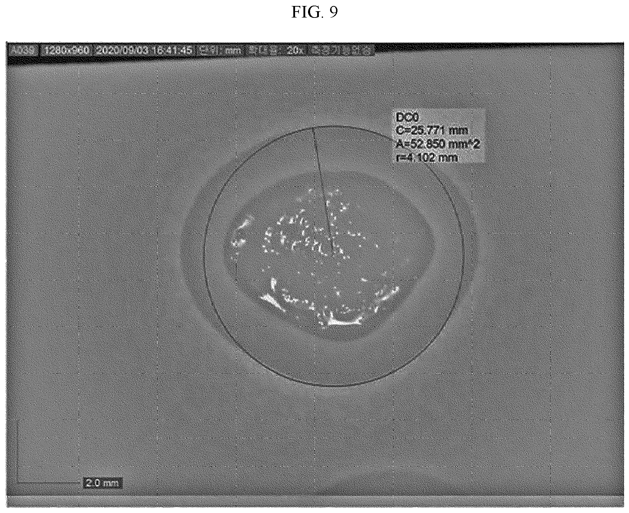

In addition, the electrolyte wettability of the separator for a lithium secondary battery according to each of Examples 1 and 2 and Comparative Examples 1-6 was determined. The results are shown in Table 1, and the electrolyte wettability of the separator for a lithium secondary battery according to each of Examples 1 and 2 and Comparative Example 1 is shown in FIGS. 7-9.

The electrolyte wettability was determined by cutting the separator for a lithium secondary battery according to each of Examples 1 and 2 and Comparative Examples 1-6 into a square shape having a size of MD 10 cm x TD 10 cm, fixing both sides thereof to slide glass so that the central portion might float in the air, and dropping an electrolyte (EC/EMC = 3/7, $LiPF_6$ = 1.2 M) onto the separator, and calculating the area wetted with the electrolyte after 3 seconds.

[Table 1]

| | Heat shrinkage at 180°C (%) | | Area wetted with electrolyte ($mm^2$) |
|---|---|---|---|
| | MD | TD | |
| Example 1 | 0.8 | 1.1 | 116.12 |
| Example 2 | 0.9 | 1.2 | 113.74 |
| Comparative Example 1 | 55.2 | 58.1 | 52.85 |
| Comparative Example 2 | 5.3 | 8.3 | 115.23 |
| Comparative Example 3 | 4.9 | 6.2 | 103.82 |
| Comparative Example 4 | 32.9 | 42.8 | 98.76 |
| Comparative Example 5 | 5.5 | 9.2 | 111.57 |
| Comparative Example 6 | 0.9 | 1.1 | 85.21 |

As can be seen from Table 1, the separator for a lithium secondary battery according to each of Examples 1 and 2 shows excellent results in terms of heat shrinkage at 180°C and electrolyte wettability.

On the contrary, it can be seen that the separator for a lithium secondary battery according to Comparative Example 1 shows inferior results in terms of electrolyte wettability and heat shrinkage at 180°C, as compared to the separator for a lithium secondary battery according to each of Examples 1 and 2.

It can be also seen that the separator for a lithium secondary battery including inorganic particles having a BET specific surface area of 20-75 $m^2$/g according to each of Comparative Examples 2, 3, 5 and 6 ensures a significant level of electrolyte wettability and heat shrinkage at 180°C.

Although the separator for a lithium secondary battery according to Comparative Example 4 includes inorganic particles having a BET specific surface area of less than 20 $m^2$/g, it includes a nanofiber scaffold, and thus can ensure a significant level of electrolyte wettability. However, since the separator uses inorganic particles having a BET specific surface area of less than 20 $m^2$/g, it shows inferior results in terms of heat shrinkage at 180°C as compared to Examples.

**Test Example 3: Determination of Resistance of Separator**

The resistance of the separator for a lithium secondary battery according to each of Example 1 and Comparative Example 6 was determined. The results are shown in the following Table 2.

The resistance of the separator was determined by forming a coin cell, wetting the coin cell sufficiently with an electrolyte (EC/EMC = 3/7, $LiPF_6$ = 1.2 M), and plotting impedance depending on frequency by using electrochemical impedance spectroscopy (EIS), wherein the real number part (x intercept) of impedance was defined as resistance.

The coin cell was prepared as follows.

Manufacture of Negative Electrode

Artificial graphite as a negative electrode active material, denka black as a conductive material and polyvinylidene fluoride (PVDF) as a binder were mixed at a weight ratio of 75:5:20, and N-methyl pyrrolidone (NMP) as a solvent was added thereto to prepare a negative electrode slurry.

The negative electrode slurry was coated on a copper current collector at a loading amount of 3.8 mAh/cm$^2$, followed by drying, to prepare a negative electrode.

Manufacture of Positive Electrode

$LiCoO_2$ as a positive electrode active material, denka black as a conductive material and polyvinylidene fluoride (PVDF) as a binder were added to N-methyl pyrrolidone (NMP) as a solvent at a weight ratio of 85:5:10 to prepare a positive electrode active material slurry. The positive electrode active material slurry was coated on a sheet-like aluminum current collector, followed by drying, to form a positive electrode active material layer having a final positive electrode loading amount of 3.3 mAh/cm$^2$.

Manufacture of Coin Cell

The separator according to each of Example 1 and Comparative Example 6 was interposed between the negative electrode and the positive electrode prepared as described above.

[Table 2]

|  | Resistance of separator ($\Omega$) |
|---|---|
| Example 1 | 0.83 |
| Comparative Example 6 | 1.26 |

As can be seen from Table 2, Comparative Example 6 having a binder polymer content of larger than 5 wt% based on 100 wt% of the organic/inorganic composite porous layer shows an increase in resistance as compared to the separator of Example 1 having a binder content of 2-5 wt% based on 100 wt% of the organic/inorganic composite porous layer.

**Claims**

1. A separator for a lithium secondary battery, comprising:

   a porous polymer substrate; and
   an organic/inorganic composite porous layer disposed on at least one surface of the porous polymer substrate and comprising a nanofiber scaffold, inorganic particles and a binder polymer,
   wherein the organic/inorganic composite porous layer has a structure comprising the inorganic particles inserted to the voids of the nanofiber scaffold,
   the inorganic particles have a BET specific surface area of 20-75 m$^2$/g, and
   the binder polymer is present in an amount of 2-5 wt% based on 100 wt% of the organic/inorganic composite porous layer.

2. The separator for a lithium secondary battery according to claim 1, wherein the inorganic particles have a BET specific surface area of 30-75 m$^2$/g.

3. The separator for a lithium secondary battery according to claim 1, wherein the nanofiber is hydrophilic.

4. The separator for a lithium secondary battery according to claim 1, wherein the nanofiber is hydrophobic.

5. The separator for a lithium secondary battery according to claim 1, wherein the nanofiber comprises an organic fiber, an inorganic fiber or a combination thereof.

6. The separator for a lithium secondary battery according to claim 5, wherein the organic fiber comprises cellulose, chitin or a combination thereof.

7. The separator for a lithium secondary battery according to claim 6, wherein the cellulose is surface-modified with a hydrophobic material.

8. The separator for a lithium secondary battery according to claim 5, wherein the inorganic fiber comprises a carbon fiber, a boron nitride fiber or a combination thereof.

9. The separator for a lithium secondary battery according to claim 1, wherein the inorganic particles have an average particle diameter (D50) of 20-40 nm.

10. The separator for a lithium secondary battery according to claim 1, wherein the inorganic particles comprise fumed alumina, fumed silica, fumed titanium dioxide, or two or more of them.

11. The separator for a lithium secondary battery according to claim 1, wherein the binder polymer comprises polyvinylidene fluoride-co-hexafluoropropylene, polyvinylidene fluoride-co-chlorotrifluoroethylene, polyvinylidene fluoride-co-tetrafluoroethylene, polyvinylidene fluoride-co-trichloroethylene, acrylic copolymer, styrene-butadiene copolymer, polyacrylic acid, polymethyl methacrylate, polybutyl acrylate, polyacrylonitrile, polyvinyl pyrro1idone, polyvinyl alcohol, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, or two or more of them.

12. The separator for a lithium secondary battery according to claim 1, wherein the organic/inorganic composite porous layer is prepared by using a nanoparticle dispersion device, and the nanoparticle dispersion device uses beads having a diameter of 0.05-0.5 mm.

13. The separator for a lithium secondary battery according to claim 1, wherein the organic/inorganic composite porous layer further comprises a dispersant.

14. The separator for a lithium secondary battery according to claim 1, wherein the surface of the organic/inorganic composite porous layer has an arithmetic mean roughness of 100-900 nm.

15. A lithium secondary battery which comprises an electrode assembly comprising a positive electrode, a negative electrode and a separator interposed between the positive electrode and the negative electrode, wherein the separator is the same as defined in any one of claims 1 to 14.

16. The lithium secondary battery according to claim 15, which is a cylindrical lithium secondary battery comprising the electrode assembly wound in a cylindrical shape.

17. The lithium secondary battery according to claim 16, wherein the cylindrical lithium secondary battery comprises no electrode tab.

18. The lithium secondary battery according to claim 16, wherein the cylindrical lithium secondary battery has a diameter of 22 mm or more.

FIG. 1

15.0kV 9.0mm x100k SE(M)                    500nm

FIG. 2

FIG. 3

5.0kV 11.3mm x10.0k 5.00um

FIG. 4

5.0kV 6.9mm x10.0k                                              5.00um

FIG. 5

15.0kV 8.9mm x5.00k SE(M)        10.0um

FIG. 6

5.0kV 8.4mm x10.0k SE(M)          5.00um

FIG. 7

FIG. 8

FIG. 9

FIG. 10

**REFERENCES CITED IN THE DESCRIPTION**

**Patent documents cited in the description**

- KR 1020210010311